# EUROPÄISCHE PATENTANMELDUNG

(11) **EP 1 334 761 A1**
(43) Veröffentlichungstag der Anmeldung: **13.08.2003**
(21) Anmeldenummer: 03001595.2
(22) Anmeldetag: 24.01.2003
(51) Int. Cl.: B01D 61/22, B01D 61/14, B01D 65/02, A23L 2/08, A23L 2/74, E03C 1/10

(54) **Querstrom-Filtrationsanlage sowie Rückflussdrossel für eine solche Anlage und Verfahren zum Betrieb einer solchen Anlage**

(30) Priorität: 07.02.2002 CH 2042002
(71) Anmelder: Bucher Guyer AG, 8166 Niederweningen (CH)
(72) Erfinder: Hartmann, Eduard, 5425 Schneisingen (CH)

(57) **Zusammenfassung**

Die Erfindung betrifft eine Querstrom-Filtrationsanlage mit einem Filterelement (1), dem Stoffgemisch aus einem Produkttank (2) durch eine Zuführleitung (3) zuführbar ist und aus dem Retentat mittels einer Rückführleitung (8) zum Produkttank (2) rückführbar ist. Zwischen dem Produkttank (2) und der Zuführleitung (3) ist ein Tank-Absperrventil (6) angeordnet. Aus einem Spülwassertank (14) ist über eine Spülleitung (15) und ein Spülleitungs-Absperrventil (16) Spülwasser in die Zuführleitung (3) zuführbar. Erfindungsgemäß ist in der Spülleitung (15) ein Element (17; 17') angeordnet ist, das das Eindringen nennenswerter Mengen des Stoffgemischs zum Spülwassertank (14) verhindert.

Eine dafür bestimmte Rückflußdrossel (17') weist mindestens eine gegen eine Feder bewegliche Klappe auf. Beim erfindungsgemäßen Verfahren wird das Spülleitungs-Absperrventil (16) langsam geöffnet und das Tank-Absperrventil (6) zeitverzögert langsam geschlossen.

Durch die Erfindung wird die Sicherheit gegen Verstopfung des Filterelements (1) erhöht.

## Beschreibung

Die Erfindung bezieht sich auf eine Querstrom-Filtrationsanlage der im Oberbegriff des Anspruchs 1 genannten Art, auf eine Rückflußdrossel für eine solche Anlage sowie auf ein Verfahren zum Betrieb einer solchen Anlage.

Solche Anlagen werden vorteilhaft angewendet, wenn es darum geht, molekulardisperse oder kolloiddisperse Stoffgemische, allenfalls mit Anteilen von Fest- bzw. Schwebstoffen, zu filtrieren. Beispiele für solche Stoffgemische sind Stoffgemische, wie sie bei der Produktion von Frucht- und Obstsäften zunächst anfallen. Diese Stoffgemische werden dann durch die Filtration in klaren Frucht- oder Obstsaft einerseits und die im wesentlichen verbleibenden Trübstoffe andererseits aufgetrennt. Dem Stoffgemisch kann beispielsweise vor der Filtration auch noch Aktivkohle zugesetzt werden, um bestimmte Wirkungen zu erzielen. Auch diese Aktivkohle muß dann mit den Trübstoffen von der Flüssigkeit abgetrennt werden.

Eine Anlage zur Querstrom-Filtration der im Oberbegriff des Anspruchs 1 genannten Art ist aus der WO-A1-01/51186 bekannt. Hierin wird eine Lösung gezeigt, wie Verstopfungen des Filtrationsmoduls durch feste Retentatanteile entfernt werden können. Bei Anlagen solcher Art besteht also das Problem, daß die Filterelemente verstopfen können, so daß die Produktion unterbrochen werden muß, um zunächst die Verstopfungen zu entfernen. Produktionsunterbrüche sind aber unerwünscht.

Aus WO-A1-00/03794 ist eine Filtrationsanlage bekannt, bei der nach Abschluß eines Filtrationszyklus über ein Ventil Spülwasser einspeisbar ist, das zur Verdrängung von hochviskosen Retentat-Resten aus der Filtereinheit dient. Durch eine solche Spülung kann das Verstopfen verhindert werden, wenn sie rechtzeitig eingeleitet wird. Die Einleitung der Spülung ist aber durchaus nicht unproblematisch, weil sich die Viskosität schlagartig ändert. Somit kann es trotz rechtzeitiger Einleitung einer Spülung zur Verblockung des Retentats in den Membranrohren des Filtrationsmoduls kommen.

Aus WO-A1-01/87470 ist eine Vorrichtung zur Reinigung von Wasser mittels umgekehrter Osmose bzw. Ultra- oder Nanofiltration bekannt. Das zuvor geschilderte Problem der schlagartigen Änderung der Viskosität bei der Einleitung der Spülung stellt sich hierbei gar nicht. Die Anlage enthält auch ein Rückschlagventil, welches offensichtlich als Rücksaugventil wirkt.

Aus EP-A1-0 305 557 ist eine Durchflußarmatur für Trinkwasser bekannt, die ein Ventil zur Verhinderung des Rückflusses enthält. Auch hier stellt sich das zuvor erwähnte Problem nicht.

Der Erfindung liegt die Aufgabe zugrunde, die Sicherheit gegen Verstopfung zu erhöhen.

Die genannte Aufgabe wird bei einer Querstrom-Filtrationsanlage der im Oberbegriff des Anspruchs 1 genannten Art durch die durch die im Kennzeichen des Anspruchs 1 angegebenen Merkmale gelöst. Die nach dem Kennzeichen des Anspruchs 1 erfindungsgemäß wirkende Rückflußdrossel ist im Anspruch 4 gekennzeichnet. Der Lösung der Aufgabe dient außerdem das im Anspruch 11 gekennzeichnete Verfahren zum Betrieb einer solchen Querstrom-Filtrationsanlage. Vorteilhafte Weiterbildungen ergeben sich aus den abhängigen Ansprüchen.

Nachfolgend werden Ausführungsbeispiele der Erfindung anhand der Zeichnung näher erläutert.

Es zeigen:
- Fig. 1: ein Schema einer erfindungsgemäßen Querstrom-Filtrationsanlage,
- Fig. 2: eine Rückflußdrossel in einer Schnittzeichnung und
- Fig. 3a und 3b: diese Rückflußdrossel in Ansichten von beiden Stirnseiten.

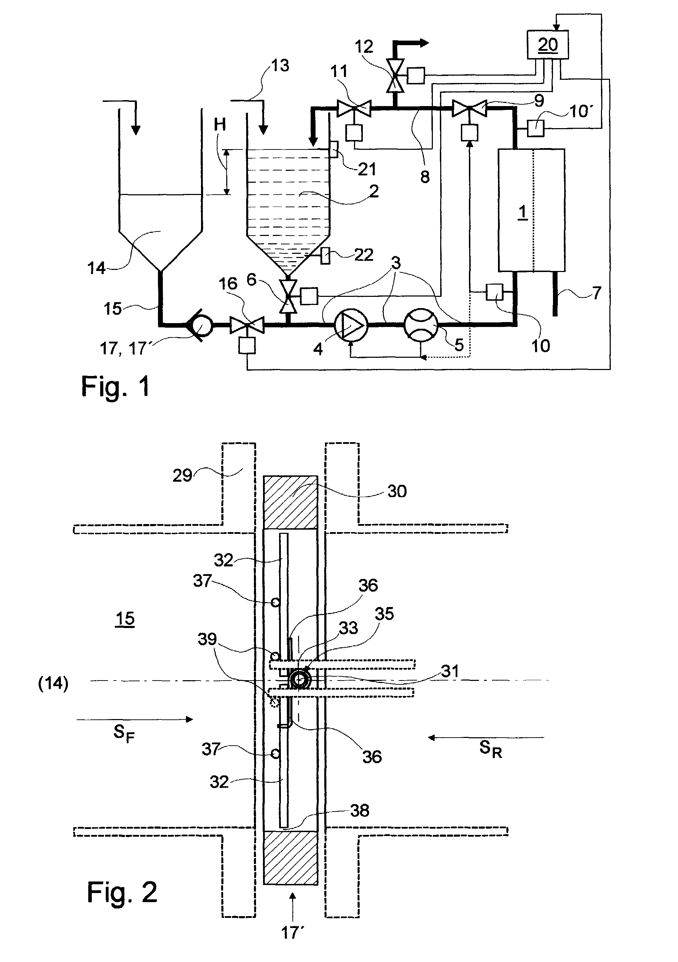

In der Fig. 1 bedeutet 1 ein Filterelement, in dem die Abtrennung der gewünschten flüssigen Phase aus dem Stoffgemisch erfolgt. Auf die Bauart des Filterelements 1 kommt es dabei nicht an. In erster Linie kommt die Erfindung dann zur Anwendung, wenn das Filterelement 1 beispielsweise gerade oder gewickelte Rohrmembranen oder Kapillarrohre enthält, da mit solchen Filterelementen 1 meistens Stoffgemische mit hohen Trübstoffanteilen verarbeitet werden. Tritt eine Verstopfung von Teilen des Filterelements 1 auf, so führt das regelmäßig zu einem Betriebsunterbruch mit all seinen nachteiligen Folgen. Durch die Erfindung kann das Verstopfen solcher Membranrohre des Filterelements 1 verhindert werden.

Das zu filtrierende Stoffgemisch befindet sich in einem Produkttank 2. Von diesem gelangt es durch eine Zuführleitung 3 zum Filterelement 1. In die Zuführleitung 3 sind eine Förderpumpe 4 und ein Durchflußmesser 5 eingesetzt, wobei die Drehzahl der Förderpumpe 4 durch den Durchflußmesser 5 in der Weise steuer- bzw. regelbar ist, daß entweder die Förderleistung durch die Zuführleitung 3 oder der Druck in der Zuführleitung 3 am Eingang des Filterlements 1 konstant bleibt. Das ermöglicht eine wirtschaftliche Produktion.

Im Auslauf des Produkttanks 2, der in die Zuführleitung 3 mündet, befindet sich ein Tank-Absperrventil 6, das motorisch oder pneumatisch betätigbar ist. Auf der Sekundärseite des Filterelements 1 ist eine Permeatleitung 7 an dieses angeschlossen, durch die das im Filterelement 1 abgetrennte Permeat, also beispielsweise der klare Obstsaft, abgenommen werden kann.

Andererseits führt vom Filterelement 1 eine Rückführleitung 8 zum Produkttank 2. Darin wird das Retentat vom Filterelement 1 zum Produkttank 2 zurückgeführt. In diese Rückführleitung 8 ist ein Drosselventil 9 eingesetzt, das ebenfalls motorisch oder pneumatisch betätigbar ist. Dieses Drosselventil 9 ist von einem Retentatleitungs-Drucksensor 10 aus ansteuerbar, der den Druck am Retentat-Eingang des Filterelements 1 erfaßt. Vorteilhaft kann auch an der Rückführleitung 8 unmittelbar hinter dem Filterelement 1 ein weiterer Retentatleitungs-Drucksensor 10' angeordnet sein. Der vom Retentatleitungs-Drucksensor 10 erfaßbare Druck in der Zuführleitung 3 unmittelbar vor dem Filterlemente 1 hängt mit der Förderleistung der Förderpumpe 4 und dem Zustand des Filterelements 1 zusammen. Je höher die Viskosität des Stoffgemisches ist, desto höher ist der Durchflußwiderstand. Eine Erhöhung der Viskosität kann beispielsweise durch einen erhöhten Anteil an Fest- oder Schwebstoffen im Stoffgemisch verursacht sein. In Abhängigkeit von diesem Durchtrittswiderstand kann nun das Drosselventil 9 motorisch oder pneumatisch mehr oder weniger geöffnet bzw. geschlossen werden. Vor der Einmündung der Rückführleitung 8 in den Produkttank 2 befindet sich ein Rückführleitungs-Absperrventil 11, das immer dann geöffnet ist, wenn das das Filterelement 1 verlassende Retentat zum Produkttank 2 zurückgeführt werden soll.

Das im Produkttank 2 befindliche Stoffgemisch wird bei geöffnetem ein Tank-Absperrventil 6 mit Hilfe der Förderpumpe 4 zum Filterelement 1 gefördert. Im Filterelement 1 wird aus dem Stoffgemisch Permeat abgeschieden. Das Retentat wird durch die Rückführleitung 8 bei geöffnetem Rückführleitungs-Absperrventil 11 zum Produkttank 2 zurückgeführt. Dadurch erhöht sich im Laufe des Filtrationsprozesses die Viskosität des zirkulierenden Stoffgemisches, weil der Anteil an Fest- oder Schwebstoffen im Stoffgemisch immer weiter steigt, je mehr Permeat im Filterlement 1 abgeschieden worden ist. Gleichzeitig geht die Filtrationsleistung zurück. Hat die Viskosität des Stoffgemisches eine bestimmte Höhe erreicht, muß die Filtration beendet werden, und zwar so rechtzeitig, daß das Filterelement 1 nicht verstopfen kann. Das zirkulierende Stoffgemisch kann deshalb durch Öffnen eines Auslaßventils 12, das an die Rückführleitung 8 anschließt, aus dem Kreislauf abgenommen werden.

Soll der Filtrationsvorgang begonnen werden, so wird dem Produkttank 2 zunächst über eine Produktleitung 13 das zu filtrierende Stoffgemisch zugeführt. Die Förderpumpe 4 geht dann in Betrieb. Anfangs ist das im Produkttank 2 enthaltene Stoffgemisch relativ niederviskos. Die Förderpumpe 4 wird so geregelt, daß die Förderleistung durch die Zuführleitung 3 konstant bleibt. Im Filterelement 1 wird Permeat abgetrennt, so daß das das Filterelement 1 verlassende Retentat eine höhere Viskosität aufweist. Dieses Retentat wird wieder dem Produkttank 2 zugeführt. Dessen Menge ist wegen der Abscheidung von Permeat im Filterelement 1 kleiner. Zum Ausgleich wird durch die Produktleitung 13 weiteres Stoffgemisch zugeführt. Mit fortschreitender Dauer des Prozesses steigt so die Viskosität des im Produkttank 2 befindlichen Stoffgemisches immer weiter an. Das führt dann dazu, daß dann, wenn die Förderpumpe 4 die Förderleistung durch die Zuführleitung 3 konstant hält, der mit dem Retentatleitungs-Drucksensor 10 erfaßbare Druck ansteigt. Weil dieser Druck einen bestimmten Grenzwert nicht überschreiten darf, wird dann die Förderpumpe 4 so geregelt, daß dieser Grenzwert nicht überschritten wird. Die Filtrationsleistung geht dann zurück.

Dadurch wird dann ein Zustand erreicht, daß die Filtrationsleistung zu klein für einen wirtschaftlichen Betrieb wird und schließlich auch nicht mehr sicher ist. Dann soll die Filtration beendet werden. Ein Abstellen Förderpumpe 4 der Filtrationsanlage darf nun aber nicht erfolgen, weil dies unweigerlich zur einer Verstopfung führen würde. Es ist jetzt nötig, das in der Anlage befindliche Stoffgemisch aus dieser zu verdrängen. Dies geschieht durch Spülen.

Deshalb ist ein Spülwassertank 14 vorhanden, aus dem Spülwasser durch eine Spülleitung 15 in die Zuführleitung 3 eingespeist werden kann. Im Zuge der Spülleitung 15 ist ein Spülleitungs-Absperrventil 16 eingesetzt. Erfindungsgemäß ist zwischen dem Spülwassertank 14 und dem Spülleitungs-Absperrventil 16 noch ein Element angeordnet, dessen Aufgabe es ist, zu verhindern, daß beim Öffnen des Spülleitungs-Absperrventils 16 nennenswerte Mengen des Stoffgemischs aus der Zuführleitung 3 zum Spülwassertank 14 zurückströmen. Beim Übergang vom Filtrations-zum Spülvorgang wird mehr oder weniger gleichzeitig das Tank-Absperrventil 6 geschlossen und das Spülleitungs-Absperrventil 16 geöffnet. Das Tank-Absperrventil 6 und das Spülleitungs-Absperrventil 16 werden von einem Steuergerät 20, mit dem der Filtrationsprozeß steuerbar ist, betätigt. Beim mehr oder weniger gleichzeitigen Öffnen des Spülleitungs-Absperrventils 16 und Schließen des Tank-Absperrventils 6 könnte infolge eines Niveau-Unterschieds H zwischen dem Inhalt im Produkttank 2 und dem Inhalt im Spülwassertank 14 dann Stoffgemisch aus dem Produkttank 2 zum Spülwassertank 14 strömen, wenn der Niveau-Unterschied H eine bestimmte Größe hat, wobei auch zu berücksichtigen ist, daß die Dichte im Produkttank 2 größer ist als jene des Spülwassers im Spülwassertank 14. Dieses Eindringen nennenswerter Mengen des Stoffgemischs in Richtung zum Spülwassertank 14 wird durch das erwähnte Element verhindert. Da bei bekannten Filtrationsanlagen die Spülleitung 15 meist mehrere Meter lang ist, bleibt der Spülwassertank 14 vom Eindringen von Stoffgemisch verschont. Das im Spülwassertank 14 enthaltene Wasser wird also nicht verschmutzt.

Dieses den Stoffgemisch-Rückfluß verhindernde Element ist entweder ein Rückschlagventil 17 oder eine Rückflußdrossel 17'.

Durch die Anordnung des Rückschlagventils 17 bzw. der Rückflußdrossel 17' wird es zudem möglich, das Verfahren zum Betrieb einer solchen Querstrom-Filtrationsanlage deutlich zu verbessern. Es wurde beobachtet, daß es beim Schließen des Tank-Absperrventils 6 und gleichzeitigen Öffnen des Spülleitungs-Absperrventils 16 durchaus zu einer partiellen Verstopfung des Filterelements 1 kommen kann. Das hat damit zu tun, daß das Filterelement 1 in der Regel aus einer größeren Zahl von parallelen Membranrohren besteht. Wird nun plötzlich Spülwasser gefördert, das das höher viskose Stoffgemisch zunächst aus der Zuführleitung 3 und dann aus dem Filterelement 1 verdrängt, so kann es vorkommen, daß in einzelnen Membranrohren des Filterelements 1 das höher viskose Stoffgemisch verbleibt, während es aus anderen Membranrohren durch das Spülwasser verdrängt wird. Das führt also zu einer teilweisen Verstopfung des Filterelements 1, was die Filtrationsleistung nachteilig verändert. Dies erfordert dann regelmäßig einen Betriebsunterbruch.

Es hat sich als sehr vorteilhaft erwiesen, daß das Spülleitungs-Absperrventil 16 langsam geöffnet wird, während das Tank-Absperrventil 6 langsam geschlossen wird. Um einen sicheren Betrieb zu gewährleisten, soll dabei zuerst das Spülleitungs-Absperrventil 16 langsam in Öffnungsrichtung betrieben werden, und erst dann, wenn das das Spülleitungs-Absperrventil 16 etwas geöffnet ist, mit dem Schließen des Tank-Absperrventils 6 begonnen werden. Das Schließen des Tank-Absperrventils 6 erfolgt also gegenüber dem Öffnen des Spülleitungs-Absperrventils 16 zeitverzögert. Genau dann entfaltet das Rückschlagventil 17 bzw. die Rückflußdrossel 17' die Wirkung, daß der zuvor geschilderte Rückfluß verhindert bzw. behindert wird. Das hat nun auch in vorteilhafter Weise zur Folge, daß sich die Viskosität des durch die Zuführleitung 3 mit Hilfe der Förderpumpe 4 geförderten Stoffgemischs nicht schlagartig ändert, sondern daß sie kontinuierlich vermindert wird. Damit reduziert sich die Gefahr, daß einzelne Membranrohre des Filterelements 1 verstopfen, außerordentlich stark. Gleichzeitig treten auch keine plötzlichen Druckänderungen auf, die sonst zu Membranablösungen führen könnten. Wegen der Rückflußdrossel 17 wird aber auch bei gleichzeitig offenem Tank-Absperrventil 6 und Spülleitungs-Absperrventil 16 sicher verhindert, daß infolge des Niveau-Unterschieds H eine nennenswerte Menge des Stoffgemischs aus dem Produkttank 2 in Richtung Spülwassertank 14 durchtritt.

Um eine Verminderung des Flusses durch die Zuführleitung 3 sicher zu vermeiden, ist es vorteilhaft, wenn das Schließen des Tank-Absperrventils 6 etwas später beginnt als das Öffnen des Spülleitungs-Absperrventils 16. Die Zeitspanne vom Beginn des Öffnens des Spülleitungs-Absperrventils 16 bis zum Erreichen der voll offenen Stellung und die Zeitspannevom Beginn des Schließens des Tank-Absperrventils 6 bis zum Erreichen der geschlossenen Stellung ist vorteilhaft etwa gleich lang.

Damit die langsame Verminderung der Viskosität des Stoffgemischs nicht einen großen zusätzlichen Verbrauch an Spülwasser nach sich zieht, ist es vorteilhaft, wenn diese Zeitspanne etwa 5 bis 8 Sekunden beträgt. Dabei steht im Vordergrund, daß das mit dem Spülwasser verdünnte Retentat aus der Filtrationsanlage abgelassen und als Abwasser entsorgt werden muß. Die Abwassermenge soll so klein wie möglich sein. Die Größe der Zeitspanne kann anlagenbedingt auch abweichende Werte haben.

Aufgabe des Rückschlagventils 17 bzw. der Rückflußdrossel 17' ist es also, den Durchtritt nennenswerter Mengen des Stoffgemischs in Richtung Spülwassertank 14 zu verhindern. Wird ein in einer Richtung voll sperrendes Rückschlagventil 17 angewendet, dann wird der Durchtritt vollständig verhindert. Dann aber ist zum Öffnen des Rückschlagventils 17 ein bestimmter Differenzdruck nötig, was nachteilig sein kann.

Es ist deshalb vorteilhaft, statt des Rückschlagventils 17 eine Rückflußdrossel 17' vorzusehen. Diese soll dem Durchtritt des Spülwassers vom Spülwassertank 14 zur Zuführleitung 3 keinen nennenswerten Widerstand entgegensetzen. Als vorteilhaft hat es sich erwiesen, wenn die Rückflußdrossel 17 so ausgebildet ist, daß sie im geschlossenen Zustand einen minimalen freien Durchtrittsquerschnitt in beiden Strömungsrichtungen aufweist. Das trägt dazu bei, daß schlagartige Druckänderungen vermieden werden.

In der Fig. 1 ist am Produkttank 2 ein erster Niveauschalter 21 gezeigt. Mit dessen Hilfe ist es möglich, das Niveau im Produkttank 2 während des Filtrationsprozesses konstant gehalten wird. Damit erreichbar, daß dem Produkttank 2 immer wieder neues Stoffgemisch durch die Produktleitung 13 zugeführt wird, um die Verringerung der umlaufenden Menge des Stoffgemischs durch das Abscheiden von Permeat im Filterelement 1 auszugleichen.

Gezeigt ist auch ein zweiter Niveauschalter 22. Dieser befindet sich im unteren Bereich des Produkttanks 2. Dieser Niveauschalter 22 ist bedeutsam für die Steuerung am Ende eines Filtrationsprozesses vor dem Einleiten des Spülvorgangs. Zunächst wird das in der Filtrationsanlage befindliche Stoffgemisch bei geschlossenem Rückführleitungs-Absperrventil 11 durch Öffnen des Auslaßventils 12 aus der Filtrationsanlage abgelassen. Sobald das Niveau im Produkttank 2 so weit abgesunken ist, daß der zweiter Niveauschalter 22 anspricht, wird das Auslaßventil 12 wieder geschlossen und das geschlossenem Rückführleitungs-Absperrventil 11 wieder geöffnet. Nun kann das Niveau im Produkttank 2 nicht weiter sinken. Dann wird die Spülvorgang wie vorstehend beschrieben eingeleitet, indem zuerst das Spülleitungs-Absperrventil 16 langsam geöffnet und dann das Tank-Absperrventil 6 langsam geschlossen wird.

Es wurde erwähnt, daß der Niveau-Unterschied H bedeutsam ist. Beim Ablassen des in der Filtrationsanlage befindliche Stoffgemischs bis zum Ansprechen des zweiten Niveauschalters 22 kann ein Rückfluß des Stoffgemischs in Richtung Spülwassertank 14 nicht auftreten, weil dann in der Regel das Niveau im Produkttank 2 niedriger ist als das Niveau im Spülwassertank 14, so daß der Niveau-Unterschied H negativ ist. Dieser Zustand ist aber nicht immer gegeben. Es kann durchaus der Fall eintreten, daß der Spülvorgang eingeleitet werden soll, wenn das Niveau im Produkttank 2 höher ist. Dann ist der Niveau-Unterschied H bedeutsam und das Rückschlagventil 17 bzw. die Rückflußdrossel 17' kommen erfindungsgemäß zur Wirkung.

In der Fig. 2 ist ein Ausführungsbeispiel einer Rückflußdrossel 17' in einem Horizontalschnitt gezeigt. Es ist gezeigt, daß die Rückflußdrossel 17' scheibenförmige Gestalt hat, die zwischen zwei Flanschen 29 der Spülleitung 15 einbaubar ist. Der Übersichtlichkeit wegen sind die die Rückflußdrossel 17' zwischen den Flanschen 29 haltenden Schrauben sowie Dichtungen nicht gezeichnet. Die Rückflußdrossel 17' besteht aus einem Ring 30, in dem mittig eine Drehachse 31 angeordnet ist, um den zwei Klappen 32 verschwenkbar sind. Die Drehachse 31 wird umgeben von Führungshülsen 33, die an den Klappe 32 befestigt, beispielsweise aufgeschweißt, sind. Dies wird noch klarer gezeigt werden.

Auf der im Ring 30 angeordneten Drehachse 31 befindet sich eine Schenkelfeder 35, deren beide Schenkel 36 gegen je eine der Klappen 32 drücken. Durch Stege 37, die im Ring 30 gehalten sind, wird erreicht, daß die Klappen 32 unter der Wirkung der Schenkelfeder 35 in ihrer ersten Lage quer zu Strömungsrichtung stehen, also ein Hindernis für die mit einem Pfeil S_{R} dargestellte Strömung in Richtung Spülwassertank 14 (Fig. 1) darstellen. Zwischen dem Ring 30 und den Klappen 32 verbleibt aber ein Spalt 38, durch den geringe Mengen des Mediums hindurchtreten können. Ein solcher Spalt befindet sich auch in der Mitte zwischen den beiden Klappen 32, ist aber aus Gründen der Übersichtlichkeit nicht mit einer Bezugszahl gekennzeichnet.

Die mit einem Pfeil S_{F} gekennzeichnete Strömungsrichtung vom Spülwassertank 14 zur Zuführleitung 3 (Fig. 1) wird aber kaum behindert, weil unter der Wirkung dieser Strömung die Klappen 32 gegen die Kraft der Schenkelfeder 35 um die Drehachse 31 verschwenkt werden, so daß sie dann parallel zur Strömung S_{F} stehen, was in der Fig. 2 durch eine gestrichelte Darstellung angedeutet ist. Die Verschwenkung wird begrenzt durch zwei Anschläge 39.

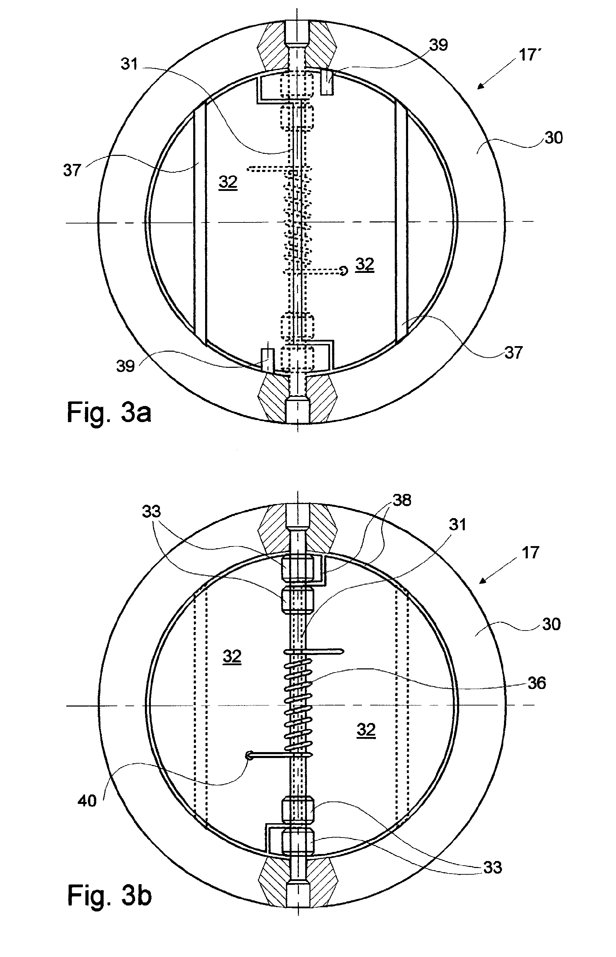

In den Fig.3a und 3b ist eine beidseitige Ansicht dieser Ausführungsform der Rückflußdrossel 17' gezeigt, also von beiden Stirnseiten her. Die Fig. 3a zeigt die Ansicht in der Richtung, die in der Fig. 2 mit dem Pfeil S_{F} gekennzeichnet ist, während die Fig. 3b die Ansicht aus der zweiten Richtung zeigt, die in der Fig. 2 mit dem Pfeil S_{R} gekennzeichnet ist. Gleiche Bezugszahlen beziehen sich auf die gleichen Teile wie in der Fig. 2. Die Drehachse 31 bildet die Drehachse für die beiden Klappen 32. Die Führungshülsen 33 umgeben die Drehachsen 31, so daß sich die beiden Klappen 32 um diese Drehachse 31 drehen können. Zwei der Führungshülsen 33 sind an der einen Klappe 32 festigt, zwei weitere Führungshülsen 33 an der anderen Klappe 32. In der Fig. 3b, die die Ansicht auf die Klappen 32 mit den Führungshülsen 33 zeigt, ist die oberste und die unterste Führungshülse 33 an der links dargestellten Klappe 32 befestigt, die beiden anderen Führungshülsen 33 sind an der rechts dargestellten Klappe 32 befestigt. Die Befestigung kann beispielsweise durch Schweißen erfolgen.

Gezeigt ist in den Fig. 3a und 3b zudem, daß die Schenkelfeder 35 dadurch in ihrer Lage um die Zentralachse 34 gehalten wird, daß eines ihrer Enden in ein Loch 40 in der einen Klappe 32 eingreift.

Weil innerhalb des Rings 30 der Spalt 38 vorhanden ist, kann sich über der Rückflußdrossel 17' kein größerer statischer Druck aufbauen. Deshalb ist es vorteilhaft möglich, die Klappen 32 aus dünnen Blech zu fertigen. Damit ist deren Masse klein, der Platzbedarf niedriger und auch die Fertigungskosten sind geringer.

Im Rahmen der gezeigten Erfindung bestehen durchaus weitere Möglichkeiten der konstruktiven Gestaltung der Rückflußdrossel 17'. Weil diese Rückflußdrossel 17' beispielsweise bei der Produktion von Nahrungsmitteln verwendet wird, bestehen alle ihre Teile vorteilhaft aus nichtrostendem Stahl.

Durch die Erfindung wird erreicht, daß die Gefahr des Verstopfens des Filterelements 1 (Fig. 1), oder von Teilen davon, deutlich vermindert werden kann. In der Fig. 1 ist gezeigt, daß die meisten der Ventile, nämlich das Tank-Absperrventil 6, das Drosselventil 9, das Rückführleitungs-Absperrventil 11, das Auslaßventil 12 und das Spülleitungs-Absperrventil 16 motorisch bzw. pneumatisch angetrieben und über eine Leitung mit dem Steuergerät 20 verbunden sind. Diese Ventile sind also nicht ortsbedient, sondern vom Steuergerät 20 her steuerbar. Dies erlaubt eine zentrale Bedienung und Steuerung der Filtrationsanlage. Es ist so beispielsweise auch möglich, daß der Vorgang des Spülens der Filtrationsanlage automatisch eingeleitet wird, beispielsweise dann, sobald der vom Retentatleitungs-Drucksensor 10 erfaßbare Druck einen bestimmten Grenzwert überschreitet. Dabei kann auch der vom weiteren Retentatleitungs-Drucksensor 10' erfaßte Druck berücksichtigt werden.

Vielfach wird es zweckmäßig sein, den Beginn des Verdrängens des Stoffgemischs aus der Filtrationsanlage von Hand einzuleiten. Dies beispielsweise dann, wenn die Produktion am Ende eines Arbeitstages gestoppt werden soll. Die Filtrationsanlage darf erst dann stillgesetzt werden, wenn das Stoffgemisch aus der Filtrationsanlage verdrängt wurde und die Spülung vorgenommen worden ist. Dies deshalb, weil ein Stillsetzen der Filtrationsanlage bei noch darin befindlichen Stoffgemisch zur Verstopfung der Filtrationsanlage führen könnte.

## Patentansprüche

1. Querstrom-Filtrationsanlage mit einem Filterelement (1), dem Stoffgemisch aus einem Produkttank (2) durch eine Zuführleitung (3) zuführbar ist und aus dem Retentat mittels einer Rückführleitung (8) zum Produkttank (2) rückführbar ist, wobei zwischen dem Produkttank (2) und der Zuführleitung (3) ein Tank-Absperrventil (6) angeordnet ist, und bei der aus einem Spülwassertank (14) über eine Spülleitung (15) und ein Spülleitungs-Absperrventil (16) Spülwasser in die Zuführleitung (3) zuführbar ist, **dadurch gekennzeichnet, daß** in der Spülleitung (15) ein Element (17; 17') angeordnet ist, das das Eindringen nennenswerter Mengen des Stoffgemischs zum Spülwassertank (14) verhindert.

2. Filtrationsanlage nach Anspruch 1, **dadurch gekennzeichnet, daß** das Element ein Rückschlagventil (17) ist.

3. Filtrationsanlage nach Anspruch 1, **dadurch gekennzeichnet, daß** das Element eine Rückflußdrossel (17') ist.

4. Rückflußdrossel (17) für eine Querstrom-Filtrationsanlage nach Anspruch 3, **dadurch gekennzeichnet, daß** die Rückflußdrossel (17') mindestens eine bewegliche Klappe (32) aufweist, die durch eine Feder (35) in einer ersten Lage gehalten wird und durch strömendes Spülwasser gegen die Kraft der Feder (35) aus dieser ersten Lage herausbewegt wird.

5. Rückflußdrossel (17') nach Anspruch 4, **dadurch gekennzeichnet, daß** die Rückflußdrossel (17') zwei bewegliche Klappen (32) aufweist, die um eine Drehachse (31) verschwenkbar sind.

6. Rückflußdrossel (17') nach Anspruch 5, **dadurch gekennzeichnet, daß** die beweglichen Klappen (32) innerhalb eines Rings (30) angeordnet sind, der zwischen Flanschen (29) in die Spülleitung (15) einbaubar ist.

7. Rückflußdrossel (17') nach Anspruch 6, **dadurch gekennzeichnet, daß** jede der Klappen (32) mit zwei Führungshülsen (33) ausgestattet ist, durch die die Drehbarkeit um eine Drehachse (31) erzielt wird.

8. Rückflußdrossel (17') nach Anspruch 7, **dadurch gekennzeichnet, daß** beide Klappen (32) um eine gemeinsame Drehachse (31) drehbar sind.

9. Rückflußdrossel (17') nach einem der Ansprüche 5 bis 8, **dadurch gekennzeichnet, daß** die Rückflußdrossel (17') Stege (37) aufweist, gegen die die Klappen (32) unter der Wirkung der Feder (35) in die erste Lage gedrückt werden.

10. Rückflußdrossel (17') nach einem der Ansprüche 5 bis 9, **dadurch gekennzeichnet, daß** innerhalb der Rückflußdrossel (17') ein Spalt (38) vorhanden ist, durch den auch in der ersten Lage der Klappen (32) geringe Mengen des Mediums hindurchtreten können.

11. Verfahren zum Betrieb einer Querstrom-Filtrationsanlage nach Anspruch 1, **dadurch gekennzeichnet, daß** das Spülleitungs-Absperrventil (16) langsam geöffnet wird, und daß das Tank-Absperrventil (6) zeitverzögert langsam geschlossen wird.

12. Verfahren nach Anspruch 11, **dadurch gekennzeichnet, daß** die Zeitspanne vom Beginn des Öffnens des Spülleitungs-Absperrventils (16) bis zum Erreichen der voll offenen Stellung etwa gleich lang ist wie die Zeitspanne vom Beginn des Schließens des Tank-Absperrventils (6) bis zum Erreichen der geschlossenen Stellung.

13. Verfahren nach Anspruch 12, **dadurch gekennzeichnet, daß** die Zeitspanne etwa 5 bis 8 Sekunden beträgt.
